# EUROPÄISCHE PATENTSCHRIFT

(11) **EP 3 769 589 B1**
(45) Veröffentlichungstag und Bekanntmachung des Hinweises auf die Patenterteilung: **25.01.2023**
(21) Anmeldenummer: 19721222.8
(22) Anmeldetag: 17.04.2019
(51) Int. Cl.: H05B 47/19, H05B 47/105, H05B 47/18, H04L 69/08, H04L 69/18, H04L 12/66

(54) **KOMMUNIKATIONSMODUL FÜR EIN LEUCHTMITTEL-BETRIEBSGERÄT**
COMMUNICATION MODULE FOR A LAMP OPERATING UNIT
MODULE DE COMMUNICATION POUR UN APPAREIL DE FONCTIONNEMENT DE MOYEN D'ÉCLAIRAGE

(30) Priorität: 27.04.2018 DE 202018102367 U
(43) Veröffentlichungstag der Anmeldung: 27.01.2021
(73) Patentinhaber: Tridonic GmbH & Co. KG, 6851 Dornbirn (AT)
(72) Erfinder: LOCHMANN, Frank, 88147 Achberg (DE); PIOSKE, Jan, 6850 Dornbirn (AT); REBHANDL, Philip, 6850 Dornbirn (AT)
(74) Vertreter: Rupp, Christian
(86) Internationale Anmeldenummer: PCT/EP2019/060021
(87) Internationale Veröffentlichungsnummer: WO 2019/206782

(56) Entgegenhaltungen:
- WO-A1-2015/104279
- GB-A- 2 524 664
- US-A1- 2015 008 846
- US-A1- 2016 286 628

## Beschreibung

### GEBIET DER ERFINDUNG

Die vorliegende Erfindung betrifft ein Kommunikationsmodul für ein Leuchtmittel-Betriebsgerät sowie ein Leuchtmittel-Betriebsgerät, aufweisend wenigstens ein solches erfindungsgemäßes Kommunikationsmodul. Das erfindungsgemäße Kommunikationsmodul ermöglicht Datenaustausch an einer ersten oder zweiten Schnittstelle mittels einem ersten Protokoll, und an einer dritten Schnittstelle, mittels einem von dem ersten Protokoll abweichenden Protokoll. An der zweiten und dritten Schnittstelle erfolgt Datenaustausch vorzugsweise mittels eines Internet of Things (IoT) Protokolls. Das erfindungsgemäße Kommunikations-modul ist derart ausgestaltet, dass eine modulare Reihenschaltung mehrerer solcher Kommunikationsmodule ermöglicht wird.

### HINTERGRUND

Aus dem Stand der Technik sind Leuchtmittel-Betriebsgeräte, insbesondere light-emitting diode (LED) Betriebsgeräte oder LED-Konverter, bekannt, welche es erlauben an einer eingangsseitigen Schnittstelle Steuerungsinformationen (in Form von seriellen Informationen) entgegenzunehmen, und an einer ausgangsseitigen Schnittstelle zumindest ein (LED-) Leuchtmittel gemäß der Steuerungsinformationen mit elektrischer Energie zu versorgen und anzusteuern.

Typischerweise nehmen die bekannten Leuchtmittel-Betriebsgeräte die Steuerungsinformationen eingangsseitig mittels des Protokolls ESI der Firma Enlighted oder auch des sehr ähnlichen Standards für vernetzte Lichttechnik "IoT-Ready" der IoT-Ready Alliance entgegen. Ebenfalls bekannt sind Leuchtmittel-Betriebsgeräte, welche eingangsseitig eines der Protokolle Digital Addressable Lighting Interface (DALI), Digital Serial Interface (DSI) oder Bluetooth Low Energy (BLE) unterstützen.

Alle bekannten Leuchtmittel-Betriebsgeräten haben gemeinsam, dass sie jeweils nur über eine eingangsseitige Schnittstelle zum Empfang der Steuerungsinformationen verfügen und die eingangsseitige Schnittstelle auf eines der genannten Protokolle beschränkt ist. Den bekannten Leuchtmittel-Betriebsgeräten mangelt es ferner an einer Möglichkeit, selbstständig Steuerungsinformationen zu erheben und gemäß dieser Informationen die ausgangsseitige Schnittstelle anzusteuern.

US 2015/008846 A1 offenbart ein bekanntes Kommunikationsmodul in einem Beleuchtungssystem.

WO 2015/104279 A1 und US 2016/286628 A1 offenbaren jeweils bekannte Kommunikationsmodule für ein Leuchtmittel-Betriebsgerät.

In Anbetracht der aus dem Stand der Technik bekannten Lösungen ist es daher besonders nachteilig, dass die verbreiteten, auf dem Protokoll ESI basierenden, Leuchtmittel-Betriebsgeräte nicht auch mittels DALI, DSI, oder BLE basierter Steuerungsinformationen, oder beliebiger anderer protokollbasierter Steuerungsinformationen betrieben werden können. Insbesondere ist aus dem Stand der Technik kein Interface-Modul für ESI basierte Leuchtmittel-Betriebsgeräte bekannt, welches eines dieser gewünschten Protokolle unterstützt.

Dies ist insbesondere nachteilig, da Aufgrund des allgemeinen Trends, individuelle Vorrichtungen miteinander zu vernetzen und diese durch Informations- und Kommunikationstechniken anzusteuern und zusammenwirken zu lassen (sogenanntes Internet der Dinge (IdD), oder IoT), auch der Wunsch nach Leuchtmittel-Betriebsgeräten besteht, welche eine flexible und vielseitige netzwerk- und protokollbasierte Ansteuerung erlauben. Um die bekannten Leuchtmittel-Betriebsgeräte flexibel und kostengünstig um individuell gewünschte, netzwerk- und protokollbasiere Funktionen erweitern zu können, besteht ferner ein Bedarf nach einer modularen Lösung.

Folglich ist es eine Aufgabe der vorliegenden Erfindung, ein modulares Kommunikationsmodul bereitzustellen, welches ermöglicht, ein ESI basiertes Leuchtmittel-Steuergerät mittels einer Vielzahl von Protokollen über mehrere Schnittstellen anzusteuern.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

### AUSFÜHRLICHE BESCHREIBUNG DER ERFINDUNG

Gemäß der vorliegenden Erfindung wird ein Kommunikationsmodul für ein Leuchtmittel-Betriebsgerät bereitgestellt, welches eine erste drahtgebundene Schnittstelle, eine zweite drahtgebundene Schnittstelle, vorzugsweise eine dritte Schnittstelle, sowie eine Steuereinheit aufweist. Die erste drahtgebundene Schnittstelle ist mechanisch und funktionell verbindbar mit dem Leuchtmittel-Betriebsgerät oder einem weiteren Kommunikationsmodul ausgelegt, während die zweite drahtgebundene Schnittstelle, mechanisch und funktionell verbindbar mit einem Netzwerkelement oder einem weiteren Kommunikationsmodul ausgelegt ist. Die Steuereinheit ist mit der ersten Schnittstelle, der zweiten Schnittstelle und optional der dritten Schnittstelle verbunden und dazu eingerichtet, serielle Informationen gemäß einem ersten Protokoll über die erste oder zweite Schnittstellen zu empfangen, zu verarbeiten, und als verarbeitete serielle Informationen über zumindest eine der drei Schnittstellen zu senden. Das Kommunikationsmodul ist gemäß dem ersten Protokoll über die erste und/oder die zweite Schnittstelle mit einem weiteren Kommunikationsmodul in Reihe schaltbar.

Die Steuereinheit ist vorzugsweise ferner dazu eingerichtet, Informationen über die dritte Schnittstelle gemäß einem zweiten, von dem ersten Protokoll abweichenden Protokoll zu senden und/oder zu empfangen.

Mit anderen Worten schlägt die vorliegende Erfindung vor, dass einem Leuchtmittel-Betriebsgerät durch das Kommunikationsmodul über dessen erste, drahtgebundene Schnittstelle, Steuerungsinformationen zur Steuerung des Leuchtmittel-Betriebsgerätes gemäß einem ersten Protokoll zur Verfügung gestellt werden. Diese Steuerungsinformation werden von der Steuereinheit des Kommunikationsmoduls aus Informationen generiert, welche an der zweiten Schnittstelle des Kommunikationsmoduls gemäß dem ersten Protokoll und/oder optional an der dritten Schnittstelle des Kommunikationsmoduls gemäß dem zweiten, von dem ersten Protokoll verschiedenen Protokoll empfangen werden. Dabei können mehrere der erfindungsgemäßen Kommunikationsmodule kombiniert, also in Reihe geschaltet, bzw. verkettet (z.B. in einer sogenannten Daisy-Chain) oder gestapelt werden. So ist es möglich, modular aus mehreren Kommunikationsmodulen, welche jeweils z.B. zumindest ein bestimmtes Protokoll unterstützen oder z.B. eine bestimmte Ausprägung der dritten Schnittstelle aufweisen (z.B. als eine Drahtlosschnittstelle und/oder Sensorschnittstelle), einen Stapel, bzw. Stack an Kommunikationsmodulen zur Ansteuerung des Leuchtmittel-Betriebsgerätes bereitzustellen, welcher insgesamt eine Vielzahl an Protokollen und Funktionen unterstützt.

Dies ist vorteilhaft, da somit eine Möglichkeit geschaffen wird, mit dem Leuchtmittel-Betriebsgerät mittels einer Vielzahl von Protokollen zu kommunizieren, und so dem Wunsch nach flexibler und vielseitiger netzwerk- und protokollbasierter Ansteuerung des Leuchtmittel-Betriebsgerätes entsprochen werden kann. Der modulare Aufbau erlaubt ferner eine vielseitig konfigurierbare und kostengünstige Lösung.

Unter einem Leuchtmittel-Betriebsgerät ist vorzugsweise ein LED-Betriebsgerät, ferner vorzugsweise ein LED-Konverter zu verstehen.

Unter einer Schnittstelle versteht man in diesem Zusammenhang vorzugsweise eine mechanische, und/oder elektronische, und/oder logische Verbindungsstelle zwischen Funktionseinheiten eines Datenverarbeitungs- oder -übertragungssystems, an welcher der Austausch von Daten, Informationen oder Steuersignalen erfolgt. Die Schnittstelle eignet sich daher sowohl zur mechanischen Verbindung bzw. Befestigung, als auch zur drahtlosen oder drahtgebundenen elektronischen Verbindung zum Austausch von Informationen (d.h. zur funktionellen oder logischen Verbindung). Drahtgebunden bedeutet vorzugsweise, dass Informationsaustausch mittels zumindest eines elektronischen Leiters erfolgt. Dies schließt zum Beispiel einen metallischen Leiter, aber auch einen optischen Faserleiter, z.B. eine Glasfaser, mit ein.

Einem Netzwerkelement ist vorzugsweise eine Vorrichtung in einem Telekommunikations-oder Datenübertragungsnetz, z.B. eine Netzwerkleitung (inkl. Stecker oder Buchse), ein Hub, Switch, Router, Gateway oder Server. Grundsätzlich ist unter einem Netzwerkelement jedes Mittel zu verstehen, dass sich zum Generieren und/oder Übertragen von Informationen an das Kommunikationsmodul eignet.

Die Steuereinheit weist vorzugsweise einen Mikrocontroller oder einen programmierbaren Prozessor auf.

Unter dem Verarbeiten serieller Informationen durch die Steuereinheit ist vorzugsweise das Umwandeln der seriellen Informationen zu verstehen, so dass diese an einer sendenden Schnittstelle über ein anderes Protokoll gesendet werden, als das Protokoll, über das die seriellen Informationen an einer empfangenden Schnittstelle empfangen werden.

Unter dem Verarbeiten serieller Informationen durch die Steuereinheit ist ferner vorzugsweise das Weiterleiten der seriellen Informationen zu verstehen, so dass diese an einer sendenden Schnittstelle über das selbe Protokoll gesendet werden, als das Protokoll, über das die seriellen Informationen an einer empfangenden Schnittstelle empfangen werden.

Unter seriellen Informationen versteht man vorzugsweise sequentiell über zumindest ein Medium (z.B. über einen Leiter, eine Faser, oder mittels Funktechnologie) übertragene digitale Informationen, z.B. bit-weise übertragene Informationen.

Vorzugsweise ist die Steuereinheit ferner dazu eingerichtet ist, serielle Informationen über die erste Schnittstelle und/oder die zweite Schnittstelle mittels eines IoT Protokolls, oder eines IoT-Ready Protokolls, oder mittels eines der Protokolle ESI, und/oder DALI, und/oder DSI, und/oder Thread, und/oder Universal Serial Bus, USB, zu senden und/oder zu empfangen.

IdD (oder engl. IoT) ist ein Sammelbegriff für Technologien, die es ermöglichen, individuelle elektronische Vorrichtungen miteinander zu vernetzen und sie durch Informations- und Kommunikationstechniken zusammenwirken zu lassen. Als ein IoT Protokoll wird daher zunächst vorzugsweise jedes Kommunikationsprotokoll angesehen, das für den Austausch von Information zwischen Endpunkten bzw. Prozessen, die in einem Netzwerk miteinander verbunden sind (ein sogenanntes verteiltes System), geeignet ist - z.B. paketbasierte Protokolle. Insbesondere geeignet sind Protokolle der Internetprotokollfamilie (auch TCP/IP-Protokollfamilie genannt), welche eine Basis für die Netzwerkkommunikation im Internet bilden. Dazu zählen z.B. Ethernet mit CSMA/CD (IEEE 802.3), LAN, oder WLAN (IEEE 802.11), als Protokolle der Netzzugangsschicht; Internet Protocol (IP) zur verbindungslosen Datenpaket-Übertragung (in den Versionen IPv4 oder IPv6), oder Internet Protocol Security (IPSec) zur sicheren Datenpaket-Übertragung, beide als Protokolle der Internetschicht; Transmission Control Protocol (TCP) zur verbindungsorientierten, zuverlässigen Übertragung von Datenströmen, User Datagram Protocol (UDP) zur verbindungslosen, unzuverlässigen Übertragung von Datenpaketen, Transport Layer Security (TLS), eine Erweiterung von TCP um Verschlüsselung, als Protokolle der Transportschicht; Hypertext Transfer Protocol (HTTP), Hypertext Transfer Protocol Secure (HTTPS), Secure Shell (SSH), Secure Copy (SCP), oder Telnet als Protokolle der Anwendungsschicht.

Bei dem IoT-Ready Protokoll handelt es sich vorzugsweise um ein Protokoll gemäß dem Standard für vernetzte Lichttechnik "IoT-Ready" der IoT-Ready Alliance.

Bei Thread handelt es sich vorzugsweise um eine quelloffene, IPv6-basierte, stromsparende, sichere und zukunftssichere Mesh-Networking-Technologie für IoT-Produkte.

Das USB Protokoll umfasst vorzugsweise die Versionen USB 1.0, USB 1.1, USB 2.0, USB 3.0, USB 3.1, USB 3.2.

Dies ist vorteilhaft, da das Kommunikationsmodul so unter zumindest einem der bisher genannten Protokolle Informationen an der zweiten Schnittstelle empfangen kann, um diese dann in serielle Informationen, vorzugsweise ESI basierte Informationen, zu verarbeiten, welche an der ersten Schnittstelle zum Leuchtmittel-Betriebsgerät übertragen werden können. Dasselbe gilt für die entgegengensetzte Übertragungsrichtung.

Vorzugsweise weist die zweite Schnittstelle ferner einen 0-10V Adapter oder einen 1-10V Adapter auf, und ist die Steuereinheit ferner dazu eingerichtet, serielle Informationen über den 0-10V Adapter oder den 1-10V Adapter zu senden und/oder zu empfangen.

Dies ist vorteilhaft, da somit auch Informationen über den 0-10V Adapter bzw. den 1-10V Adapter an der zweiten Schnittstelle gesendet bzw. empfangen werden können, um auf diesen Informationen basierend das Leuchtmittel-Betriebsgerät zu steuern.

Vorzugsweise umfasst die dritte Schnittstelle eine drahtlose Schnittstelle. Drahtlos bedeutet dabei vorzugsweise, dass die mittels der dritten Schnittstelle erfolgende elektronische Übertragung durch Funktechnologie erfolgt und nicht an Leitungen gebunden ist.

Ein Vorteil dieser drahtlosen Schnittstelle liegt darin, dass man bei der Übertragung von Informationen mittels der dritten Schnittstelle nicht an leitungsbasierte Netzwerke gebunden ist und das Kommunikationsmodul flexibel platziert werden kann.

Für den erfolgreichen Betrieb des Kommunikationsmoduls ist es insbesondere ausreichend, wenn Informationsübertragung entweder über die erste und zweite Schnittstelle, oder über die erste und dritte Schnittstelle erfolgt. D.h. ein Leuchtmittel-Betriebsgerät an der ersten Schnittstelle kann bereits dann mit Steuerinformationen versorgt werden, wenn das Kommunikationsmodul zusätzlich Informationen entweder über die zweite Schnittstelle, oder über die dritte Schnittstelle sendet oder empfängt. Das simultane Senden bzw. Empfangen von Informationen an der zweiten und dritten Schnittstelle ist zwar explizit möglich, aber nicht in jedem Anwendungsfall nötig.

Vorzugsweise ist die Steuereinheit ferner dazu eingerichtet, Informationen über die drahtlose Schnittstelle mittels eines IoT Protokolls, oder eines IoT-Ready Protokolls, oder mittels eines der Protokolle Bluetooth, und/oder Bluetooth Low Energy, BLE, und/oder Wireless LAN, WLAN, und/oder Near Field Communication, NFC, und/oder Thread, und/oder ZigBee zu senden und/oder zu empfangen.

Für das IoT Protokoll, das IoT-Ready Protokoll, sowie die weiteren, von der drahtlosen Schnittstelle unterstützten Protokolle gilt das zuvor gesagte.

Das Kommunikationsmodul kann vorzugsweise über jede einzelne der drei Schnittstellen mit zumindest einem der bisher genannten Protokolle kommunizieren, damit bei modularer Verkettung bzw. modularer Reihenschaltung mehrere Kommunikationsmodule deren Informationsaustausch an der die Kommunikationsmodule verbindenden Schnittstelle gewährleistet ist. Das bedeutet zum Beispiel, dass das Kommunikationsmodul an der zweiten Schnittstelle Informationen mittels ESI, DALI oder DSI empfangen und diese an die erste Schnittstelle weiterleiten kann, und gleichzeitig an der dritten Schnittstelle Informationen mittels WLAN empfangen, diese zu ESI, DALI oder DSI-basierter Information umwandeln, und dann über die erste Schnittstelle senden kann. Dasselbe gilt für die umgekehrte Übertragungsrichtung bzw. Mischformen. Ferner ist eine beliebige Kombination aller genannten Protokolle zur Verwendung an den drei Schnittstellen möglich.

Ferner vorzugsweise unterstützt das Kommunikationsmodul die simultane Verwendung unterschiedlicher Protokolle an unterschiedlichen Schnittstellen. So können zum Beispiel an der zweiten Schnittstelle gleichzeitig Informationen mittels DALI oder DSI, und TCP (vorzugsweise über IP, ferner vorzugsweise über HTTP) empfangen, in ESI umgewandelt, und über die erste Schnittstelle gesendet werden. Die Informationen können über die erste Schnittstelle nicht nur mittels ESI, sondern z.B. auch mittels DALI, DSI, TCP, IP, oder HTTP ausgegeben werden. Dasselbe gilt für die dritte Schnittstelle.

Vorzugsweise umfasst die dritte Schnittstelle ferner einen Sensor, vorzugsweise einen optischen Sensor.

Ein Sensor ist dabei insbesondere ein technisches Bauteil, das physikalische (z. B. Wärmemenge, Temperatur, Feuchtigkeit, Druck, Schallfeldgröße, Helligkeit, Beschleunigung) oder chemische (z. B. pH-Wert, Ionenstärke, elektrochemisches Potential) Eigenschaften und/oder die stoffliche Beschaffenheit seiner Umgebung qualitativ oder quantitativ als Messgröße erfassen und in ein verarbeitbares elektrisches Signal umformen kann.

Ein optischer Sensor ist insbesondere ein elektronisches Bauelement, welches Licht unter Benutzung des photoelektrischen Effekts in ein elektrisches Signal umwandeln oder einen von der einfallenden Strahlung abhängigen elektrischen Widerstand zeigen kann, z.B. eine Photodiode, ein CCD-Sensor, ein CMOS-Sensor, oder eine elektronische Kamera.

Dies hat den Vorteil, dass alternativ oder zusätzlich zu den an der zweiten Schnittstelle bereitgestellten Informationen, vom Kommunikationsmodul auch selbst Sensordaten erhoben und zur Steuerung (z.B. eines über die erste Schnittstelle verbundenen Leuchtmittel-Betriebsgerätes) verwendet werden können.

Vorzugsweise ist die Steuereinheit ferner dazu eingerichtet, Sensordaten von dem Sensor zu empfangen, zu verarbeiten, und als verarbeitete Sensordaten über die erste Schnittstelle und/oder die zweite Schnittstelle zu senden.

Dies hat den Vorteil, dass auch Sensordaten, welche z.B. in ESI-Informationen umgewandelt werden, zur Steuerung des Leuchtmittel-Betriebsgeräts über die erste Schnittstelle verwendet werden können. Alternativ oder zusätzlich können die Sensordaten auch mittels eins der zuvor genannten Protokolle über die zweite oder dritte Schnittstelle ausgegeben werden.

Die dritte Schnittstelle kann dabei insbesondere sowohl den Sensor, als auch die drahtlose Schnittstelle umfassen. Das heißt, der Sensor, bzw. die drahtlose Schnittstelle können entweder als Alternativen, jedoch auch gleichzeitig in dem Kommunikationsmodul vorhanden sein. Sind sowohl der Sensor, als auch die drahtlose Schnittstelle in dem Kommunikationsmodul untergebracht, so ist die Steuereinheit ferner dazu eingerichtet, jeweils separat und unabhängig Sensordaten vom Sensor zu empfangen, sowie Informationen über die drahtlose Schnittstelle zu senden und/oder zu empfangen.

Vorzugsweise ist die erste Schnittstelle und/oder die zweite Schnittstelle dazu eingerichtet, eine kraft- und/oder formschlüssige Verbindung mit dem Leuchtmittel-Betriebsgerät, dem Netzwerkelement, oder dem weiteren Kommunikationsmodul herzustellen, ferner vorzugsweise das Kommunikationsmodul an dem Leuchtmittel-Betriebsgerät, dem Netzwerkelement, oder dem weiteren Kommunikationsmodul stapelbar anzuordnen.

Das bedeutet insbesondere, dass das Kommunikationsmodul mittels einer Steck-, Schraub-, oder Klemmverbindung mit dem Leuchtmittel-Betriebsgerät, dem Netzwerkelement (auch z.B. mit einem Netzwerkkabel), oder dem weiteren Kommunikationsmodul mechanisch sicher verbunden werden kann. Die kraft- und/oder formschlüssige Verbindung umfasst optional eine Zugentlastung, bzw. einen Bestandteil einer Zugentlastung, die von der ersten Schnittstelle und/oder der zweiten Schnittstelle umfasst ist.

Dies ist insbesondere vorteilhaft, da auf diese Weise die Kommunikationsmodule als nebeneinander aufreihbare, modulare Elemente ausgebildet werden können. Ferner sind auch stapelbare, bzw. "stackable" Lösungen möglich, welche eine einfache Handhabung sicherstellen und den Platzbedarf reduzieren.

Vorzugsweise sind die erste Schnittstelle und die zweite Schnittstelle als mechanisch zueinander korrespondierende Schnittstellen ausgebildet.

Mechanisch zueinander korrespondierende Schnittstellen sind zum Beispiel Stecker und Buchse, Schraube und Mutter, sowie bei Klemmverbindungen die Klemme und das einzuklemmende Element (z.B. bei Fasern, insbesondere Glasfasern, als Leiter).

Dies hat den Vorteil, dass die Handhabung der Herstellung der mechanischen Verbindung mehrerer Kommunikationsmodule erleichtert wird.

Vorzugsweise umfasst die erste Schnittstelle eine RS-232 Schnittstelle zur Übertragung der Daten (also z.B. eine Schnittstelle die nach dem RS-232 Standard kommuniziert), ferner vorzugsweise eine RJ-45 Schnittstelle, insbesondere einen RJ45-Stecker, zur mechanischen und elektrischen Kontaktierung.

Vorzugsweise umfasst die zweite Schnittstelle eine RS-232 Schnittstelle zur Übertragung der Daten (also z.B. eine Schnittstelle die nach dem RS-232 Standard kommuniziert), ferner vorzugsweise eine RJ-45 Schnittstelle, insbesondere eine RJ45-Buchse, zur mechanischen und elektrischen Kontaktierung.

Dies hat den Vorteil, dass handelsübliches Netzwerkinstallationsmaterial, welches typischerweise RJ-45 Buchsen oder RJ-45 Stecker umfasst, zur Verkabelung bzw. Verbindung von Kommunikationsmodul, Netzwerkelement oder Leuchtmittel-Betriebsgerät verwendet werden kann.

Vorzugsweise umfasst die zweite Schnittstelle eine USB-Schnittstelle. In Frage kommen dabei insbesondere eine USB-Buchse oder ein USB-Stecker. Diese können von normaler Größe, sowie vom Typ "mini" oder "micro" sein. Auf diese Weise kann das Kommunikationsmodul über die zweite Schnittstelle mit weiteren USB-Geräten kommunizieren, z.B. zur Programmierung durch einen Benutzer mittels eines Personal Computers (PC). Es ist insbesondere möglich, dass die erste Schnittstelle, und/oder die zweite Schnittstelle als USB Schnittstelle vorgesehen sind. Ist die erste Schnittstelle als USB Schnittstelle ausgestaltet, so kann das Kommunikationsmodul mit einem Leuchtmittel-Betriebsgerät, welches ebenfalls über eine USB-Schnittstelle verfügt, kommunizieren. Die zu übertragenden Informationen können dazu zur Übertragung im USB Protokoll gekapselt oder anderweitig enthalten sein.

Vorzugsweise ist das Kommunikationsmodul ferner dazu eingerichtet, dass Informationsübertragung an der ersten Schnittstelle, und/oder der zweiten Schnittstelle, und/oder der dritten Schnittstelle bi-direktional erfolgt.

Dies hat den Vorteil, dass an allen Schnittstellen Informationen gleichzeitig in beide Richtungen ausgetauscht werden können, und so die Effektivität der Datenübertragung erhöht wird.

Vorzugsweise ist das Kommunikationsmodul ferner dazu eingerichtet, eine Versorgungsspannung an einer der drahtgebundenen Schnittstellen entgegenzunehmen und der Steuereinheit und/oder der jeweils anderen drahtgebundenen Schnittstelle bereitzustellen.

Dies hat den Vorteil, dass so z.B. ein mit der zweiten Schnittstelle verbundenes Netzwerkelement, oder ein mit der zweiten Schnittstelle verbundenes weiteres Kommunikationsmodul, oder die Steuereinheit von dem Kommunikationsmodul mit einer Versorgungsspannung versorgt werden kann, welche wiederum dem Kommunikationsmodul über die erste Schnittstelle von einem Leuchtmittel-Betriebsgerät bereitgestellt wird. Eine entsprechende Übertragung der Versorgungsspannung von der zweiten Schnittstelle zur ersten Schnittstelle bzw. zur Steuereinheit ist ebenfalls möglich.

Vorzugsweise ist das Kommunikationsmodul ferner dazu eingerichtet, die der Steuereinheit und/oder der jeweils anderen drahtgebundenen Schnittstelle bereitgestellte Versorgungsspannung zu begrenzen.

Auf diese Weise kann die Versorgungsspannung, die vom Kommunikationsmodul an die Steuereinheit, bzw. vom Kommunikationsmodul an die erste oder zweite Schnittstelle bereitgestellt wird, bedarfsgerecht angepasst werden. Ferner kann so Schäden durch Überspannung vorgebeugt werden.

Gemäß der vorliegenden Erfindung wird ferner ein Leuchtmittel-Betriebsgerät bereitgestellt, wobei das Leuchtmittel-Betriebsgerät eine drahtgebundene Schnittstelle, mechanisch und funktionell verbindbar mit dem Kommunikationsmodul gemäß einer der zuvor genannten Ausführungsformen umfasst.

Mit anderen Worten ist das erfindungsgemäße Leuchtmittel-Betriebsgerät mittels dessen drahtgebundener Schnittstelle mechanisch mit der ersten Schnittstelle des Kommunikationsmoduls verbindbar, insbesondere mittels Kraft- und/oder Formschluss, z.B. durch eine Steck-, Schraub-, oder Klemmverbindung. Die funktionelle Kopplung kommt durch die Verbindung zumindest eines Leiters (aus Metall, bzw. als optische Faser) der Schnittstelle des Leuchtmittel-Betriebsgeräts mit einem korrespondierenden Leiter der ersten Schnittstelle des Kommunikationsmoduls zu Stande.

Vorzugsweise umfasst das Leuchtmittelbetriebsgerät ferner zumindest ein Kommunikationsmodul nach einer der zuvor genannten Ausführungsformen. Es können insbesondere auch zwei, drei, oder weitere Kommunikationsmodule enthalten sein.

### BESCHREIBUNG BEVORZUGTER AUSFÜHRUNGSFORMEN

Nachfolgend wird eine detaillierte Beschreibung der Figuren gegeben. Darin zeigt:
- **Figur 1**: ein schematisches Blockschaltbild einer bevorzugten Ausführungsform eines erfindungsgemäßen Kommunikationsmoduls.
- **Figur 2**: das schematische Blockschaltbild der Figur 1, wobei weitere Details des erfindungsgemäßen Kommunikationsmoduls schematisch gezeigt werden.
- **Figur 3**: das schematische Blockschaltbild der Figur 1, wobei weitere Details des erfindungsgemäßen Kommunikationsmoduls schematisch gezeigt werden.
- **Figur 4**: schematische Blockschaltbilder bevorzugter Ausführungsformen erfindungsgemäßer Leuchtmittel-Betriebsgeräte.
- **Figur 5**: ein schematisches Blockschaltbild eines weiteren Beispiels eines erfindungsgemäßen Leuchtmittel-Betriebsgeräts.

Sich entsprechende Elemente sind in den Figuren mit den gleichen Bezugszeichen markiert.

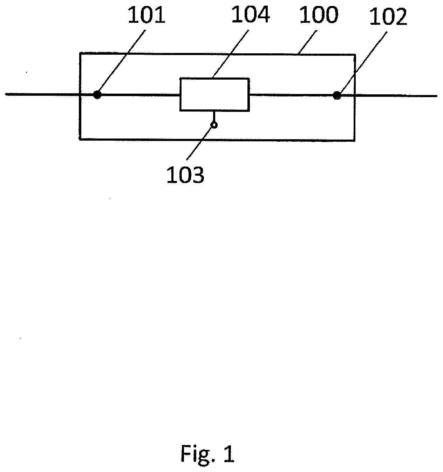

Figur 1 zeigt ein schematisches Blockschaltbild einer bevorzugten Ausführungsform eines erfindungsgemäßen Kommunikationsmoduls 100.

Die Figur 1 zeigt schematisch eine erste drahtgebundene Schnittstelle 101, eine zweite drahtgebundene Schnittstelle 102, eine optionale dritte Schnittstelle 103 und eine Steuereinheit 104. Dabei ist die Steuereinheit 104 mit der ersten Schnittstelle 101, der zweiten Schnittstelle 102 und optional der dritten Schnittstelle 103 jeweils separat verbunden. Die erste Schnittstelle 101, die zweite Schnittstelle 102, die optionale dritte Schnittstelle 103 und die Steuereinheit 104 bilden zusammen das Kommunikationsmodul 100.

Wie in Figur 1 dargestellt, ist die Steuereinheit 104 dazu eingerichtet, serielle Informationen gemäß einem ersten Protokoll über die erste oder zweite Schnittstelle 101, 102 zu empfangen, zu verarbeiten, und als verarbeitete serielle Informationen über zumindest eine der drei Schnittstellen 101, 102, 103 zu senden.

Die Steuereinheit 104 ist dabei vorzugsweise dazu eingerichtet ist, Informationen über die dritte Schnittstelle 103 gemäß einem zweiten, von dem ersten Protokoll abweichenden Protokoll zu senden und/oder zu empfangen.

Für die Eigenschaften der ersten, zweiten und dritten Schnittstelle 101, 102, 103, sowie für die von den Schnittstellen 101, 102, 103 unterstützten Protokolle und Adapter gilt das zuvor gesagte. Insbesondere ist jede der Schnittstellen 101, 102, 103 grundsätzliche dazu geeignet, jedes der zuvor genannten Protokolle zu verwenden.

Die erste Schnittstelle 101 und / oder die zweite Schnittstelle 102 können zur mechanischen Kontaktierung einer kraft- und/oder formschlüssige Verbindung eine Zugentlastung, bzw. einen Bestandteil einer Zugentlastung umfassen.

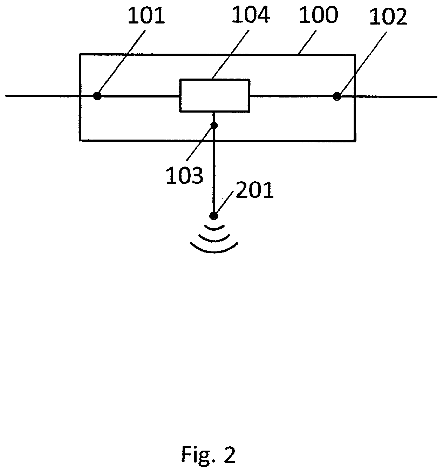

Figur 2 zeigt das schematische Blockschaltbild der Figur 1, wobei weitere Details des erfindungsgemäßen Kommunikationsmoduls 100 schematisch gezeigt werden.

Wie in Figur 2 gezeigt, umfasst die dritte Schnittstelle 103 optional eine drahtlose Schnittstelle 201. Die Steuereinheit 104 ist ferner dazu angepasst, Informationen über die drahtlose Schnittstelle 201 zu senden und/oder zu empfangen. Für die dabei von der drahtlosen Schnittstelle 201 unterstützten Protokolle gilt das zuvor gesagte.

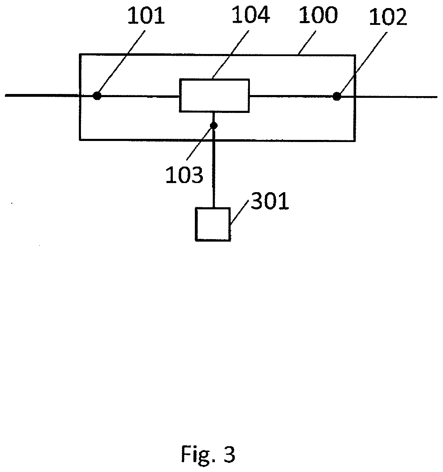

Figur 3 zeigt das schematische Blockschaltbild der Figur 1, wobei weitere Details des erfindungsgemäßen Kommunikationsmoduls 100 schematisch gezeigt werden.

Wie in Figur 3 gezeigt, umfasst hier die dritte Schnittstelle 103 optional einen Sensor 301. Die Steuereinheit 104 ist ferner dazu eingerichtet, Sensordaten von dem Sensor 301 zu empfangen, zu verarbeiten, und als verarbeitete Sensordaten über die erste Schnittstelle 101 und/oder die zweite Schnittstelle 102 zu senden.

Obwohl dies in den Figuren 1, 2 und 3 nicht gezeigt ist, kann das Kommunikationsmodul 100 sowohl die drahtlose Schnittstelle 201, als auch den Sensor 301 enthalten. Die Steuereinheit 104 ist in diesem Fall dazu eingerichtet, sowohl die drahtlose Schnittstelle 201 als auch den Sensor 301 gemäß der oben beschriebenen Weise zu steuern bzw. Daten über die dritte Schnittstelle 103 zu senden und/oder zu empfangen.

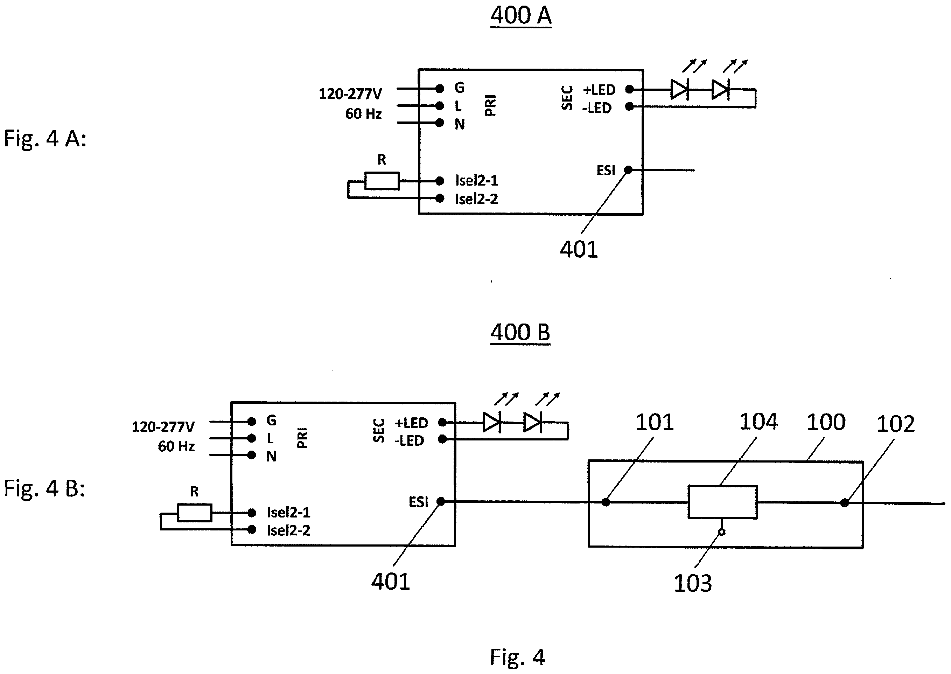

Figur 4 zeigt, in Figur 4 A und Figur 4 B, schematische Blockschaltbilder bevorzugter Ausführungsformen erfindungsgemäßer Leuchtmittel-Betriebsgeräte 400 A, 400 B.

Wie in Figur 4 A gezeigt, hat das Leuchtmittel-Betriebsgerät 400 A eine drahtgebundene Schnittstelle 401, welche dazu eingerichtet ist, das Leuchtmittel-Betriebsgerät 400 A mechanisch und funktionell mit einer ersten Schnittstelle 101 des Kommunikationsmoduls 100 zu verbinden.

Figur 4 B zeigt ein Leuchtmittel-Betriebsgerät 400 B, welches ein optionales Kommunikationsmodul 100 aufweist. Dazu ist die drahtgebundene Schnittstelle 401 des Leuchtmittel-Betriebsgerätes 400 B mit der ersten drahtgebundenen Schnittstelle 101 des Kommunikationsmoduls 100 mechanisch und funktional verbunden.

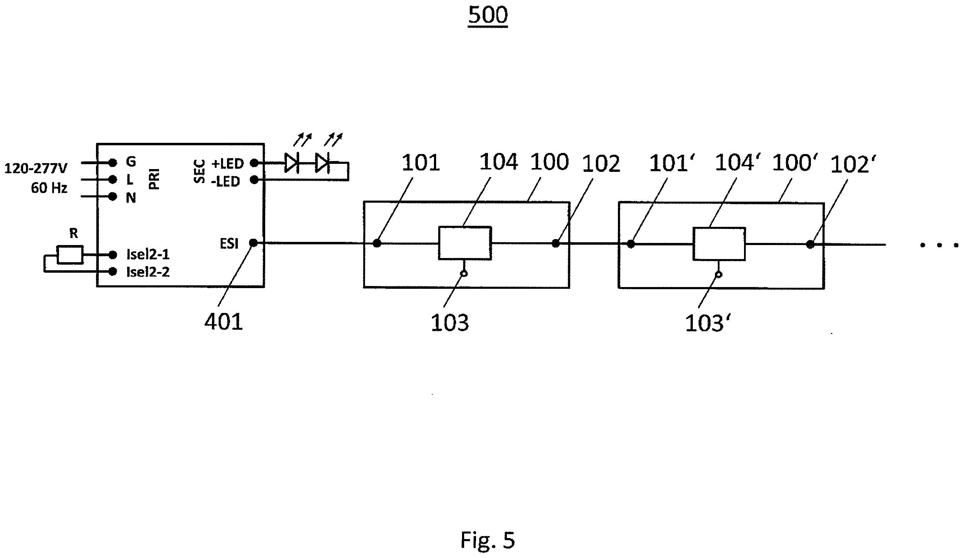

Figur 5 zeigt ein schematisches Blockschaltbild eines weiteren Beispiels eines erfindungsgemäßen Leuchtmittel-Betriebsgeräts 500.

Das in Figur 5 gezeigte Leuchtmittel-Betriebsgerät 500 umfasst ein erfindungsgemäßes Kommunikationsmodul 100, sowie ein optionales, weiteres erfindungsgemäßes Kommunikationsmodul 100'.

Dabei bilden eine erste Schnittstelle 101', eine zweite Schnittstelle 102', eine dritte Schnittstelle 103' und eine Steuereinheit 104' zusammen das Kommunikationsmodul 100'. Das Kommunikationsmodul 100' verfügt über identische Merkmale und Funktionen wie das Kommunikationsmodul 100.

Figur 5 zeigt insbesondere die eingangs beschriebene, optionale Reihenschaltung, bzw. den "Stack" von Kommunikationsmodulen 100, 100'. Dazu ist die zweite Schnittstelle 102 des Kommunikationsmoduls 100 mit der ersten Schnittstelle 101' des Kommunikationsmoduls 100' verbunden.

Obwohl in Figur 5 nur zwei Kommunikationsmodule 100, 100` gezeigt sind, kann das Leuchtmittel-Betriebsgerät auch weitere Kommunikationsmodule umfassen.

## Patentansprüche

1. Kommunikationsmodul (100) für ein Leuchtmittel-Betriebsgerät, wobei das Kommunikationsmodul (100) aufweist:
- eine erste drahtgebundene Schnittstelle (101), mechanisch und funktionell verbindbar mit dem Leuchtmittel-Betriebsgerät oder einem weiteren Kommunikationsmodul,
- eine zweite drahtgebundene Schnittstelle (102), mechanisch und funktionell verbindbar mit einem Netzwerkelement oder einem weiteren Kommunikationsmodul,
- vorzugsweise eine dritte Schnittstelle (103), und
- eine Steuereinheit (104), verbunden mit der ersten Schnittstelle (101), der zweiten Schnittstelle (102) und optional der dritten Schnittstelle (103),
wobei die Steuereinheit (104) dazu eingerichtet ist, serielle Informationen gemäß einem ersten Protokoll über die erste und/oder die zweite Schnittstelle (101, 102) zu empfangen, zu verarbeiten, und als verarbeitete serielle Informationen über zumindest eine der drei Schnittstellen (101, 102, 103) zu senden,
wobei das Kommunikationsmodul (100) gemäß dem ersten Protokoll über die erste und/oder die zweite Schnittstelle (101, 102) mit einem weiteren Kommunikationsmodul in Reihe schaltbar ist, und
wobei es sich bei dem Kommunikationsmodul (100) und dem weiteren Kommunikationsmodul um gleichartige Kommunikationsmodule handelt,
**dadurch gekennzeichnet, dass**
das Kommunikationsmodul (100) ferner dazu eingerichtet ist, dass es an der ersten drahtgebundenen Schnittstelle (101) wahlweise sowohl mit dem Leuchtmittel-Betriebsgerät als auch dem weiteren Kommunikationsmodul verbindbar ist.

2. Kommunikationsmodul (100) gemäß Anspruch 1, wobei das Kommunikationsmodul (100) die dritte Schnittstelle (103) umfasst, und
wobei die Steuereinheit (104) ferner dazu eingerichtet ist, Informationen über die dritte Schnittstelle (103) gemäß einem zweiten, von dem ersten Protokoll abweichenden Protokoll zu senden und/oder zu empfangen.

3. Kommunikationsmodul (100) gemäß Anspruch 1 oder 2, wobei die Steuereinheit (104) ferner dazu eingerichtet ist, serielle Informationen über die erste Schnittstelle (101) und/oder die zweite Schnittstelle (102) mittels eines Internet of Things, IoT, Protokolls, oder eines IoT-Ready Protokolls, oder mittels eines der Protokolle ESI, und/oder Digital Addressable Lighting Interface, DALI, und/oder Digital Serial Interface, DSI, und/oder Universal Serial Bus, USB, zu senden und/oder zu empfangen.

4. Kommunikationsmodul (100) gemäß einem der vorhergehenden Ansprüche, wobei die zweite Schnittstelle (102) ferner einen 0-10V Adapter oder einen 1-10V Adapter umfasst, und die Steuereinheit (104) ferner dazu eingerichtet ist, serielle Informationen über den 0-10V Adapter oder den 1-10V Adapter zu senden und/oder zu empfangen.

5. Kommunikationsmodul (100) gemäß einem der vorhergehenden Ansprüche, wobei das Kommunikationsmodul (100) die dritte Schnittstelle (103) umfasst, und wobei die dritte Schnittstelle (103) eine drahtlose Schnittstelle (201) umfasst wobei die Steuereinheit (104) vorzugsweise ferner dazu eingerichtet ist, Informationen über die drahtlose Schnittstelle (201) mittels eines IoT Protokolls, oder eines IoT-Ready Protokolls, oder mittels eines der Protokolle Bluetooth, und/oder Bluetooth Low Energy, BLE, und/oder Wireless LAN, WLAN, und/oder Near Field Communication, NFC, und/oder Thread, und/oder ZigBee zu senden und/oder zu empfangen.

6. Kommunikationsmodul (100) gemäß einem der vorhergehenden Ansprüche, wobei das Kommunikationsmodul (100) die dritte Schnittstelle (103) umfasst, und wobei die dritte Schnittstelle ferner einen Sensor (301), vorzugsweise einen optischen Sensor, umfasst.

7. Kommunikationsmodul (100) gemäß Anspruch 6, wobei die Steuereinheit (104) ferner dazu eingerichtet ist, Sensordaten von dem Sensor (301) zu empfangen, zu verarbeiten, und als verarbeitete serielle Sensordaten über die erste Schnittstelle (101) und/oder die zweite Schnittstelle (102) zu senden.

8. Kommunikationsmodul (100) gemäß einem der vorhergehenden Ansprüche, wobei die erste Schnittstelle (101) und/oder die zweite Schnittstelle (102) dazu eingerichtet sind, eine kraft- und/oder formschlüssige Verbindung mit dem Leuchtmittel-Betriebsgerät, dem Netzwerkelement, oder dem weiteren Kommunikationsmodul herzustellen, und vorzugsweise das Kommunikationsmodul (100) an dem Leuchtmittel-Betriebsgerät, dem Netzwerkelement, oder dem weiteren Kommunikationsmodul stapelbar anzuordnen.

9. Kommunikationsmodul (100) gemäß einem der vorhergehenden Ansprüche, wobei die erste Schnittstelle (101) und die zweite Schnittstelle (102) als mechanisch zueinander korrespondierende Schnittstellen ausgebildet sind.

10. Kommunikationsmodul (100) gemäß einem der vorhergehenden Ansprüche, wobei die erste Schnittstelle (101) einen RJ45-Stecker, umfasst.

11. Kommunikationsmodul (100) gemäß einem der Ansprüche 1 bis 10, wobei die zweite Schnittstelle (102) eine RJ45-Buchse, umfasst.

12. Kommunikationsmodul (100) gemäß einem der Ansprüche 1 bis 9, wobei die zweite Schnittstelle (102) eine USB-Schnittstelle umfasst.

13. Kommunikationsmodul (100) gemäß einem der vorhergehenden Ansprüche, wobei das Kommunikationsmodul (100) ferner dazu eingerichtet ist, dass Informationsübertragung an der ersten Schnittstelle (101), und/oder der zweiten Schnittstelle (102), und/oder der dritten Schnittstelle (103), sofern das Kommunikationsmodul (100) die dritte Schnittstelle aufweist, bi-direktional erfolgt.

14. Kommunikationsmodul (100) gemäß einem der vorhergehenden Ansprüche, wobei in der Steuereinheit (104) Betriebsinformationen oder Steuerparamater für den Betrieb des Leuchtmittel-Betriebsgerätes (400A) abgespeichert sind und es dazu eingerichtet ist, serielle Informationen gemäß dem ersten Protokoll über die erste und/oder die zweite Schnittstelle (101, 102) zu senden.

15. Leuchtmittel-Betriebsgerät (400 A), aufweisend:
- eine drahtgebundene Schnittstelle (401), mechanisch und funktionell verbindbar mit dem Kommunikationsmodul (100) nach einem der Ansprüche 1 bis 14, und
- zumindest ein Kommunikationsmodul (100) nach einem der Ansprüche 1 bis 14.

## Claims

1. Communication module (100) for a lamp operating unit, wherein the communication module (100) has:
- a first wired interface (101), mechanically and functionally connectable to the lamp operating unit or a further communication module,
- a second wired interface (102), mechanically and functionally connectable to a network element or a further communication module,
- preferably a third interface (103), and
- a control unit (104) connected to the first interface (101), the second interface (102), and optionally the third interface (103),
wherein the control unit (104) is configured to receive serial information via the first and/or the second interface (101, 102) in accordance with a first protocol, process said serial information, and transmit it as processed serial information via at least one of the three interfaces (101, 102, 103),
wherein the communication module (100) can be connected in series with a further communication module in accordance with the first protocol, via the first and/or the second interface (101, 102), and
wherein the communication module (100) and the further communication module are communication modules of the same type,
**characterized in that**
the communication module (100) is further configured so that it is optionally connectable, at the first wired interface (101), both to the lamp operating unit and to the further communication module.

2. Communication module (100) in accordance with claim 1, wherein the communication module (100) comprises the third interface (103), and
wherein the control unit (104) is further configured to transmit and/or to receive information via the third interface (103) in accordance with a second protocol deviating from the first protocol.

3. Communication module (100) in accordance with claim 1 or 2, wherein the control unit (104) is further configured to transmit and/or to receive serial information via the first interface (101) and/or the second interface (102) by means of an Internet of Things, IoT, protocol, or an lot-ready protocol, or by means of one of the protocols: ESI; and/or Digital Addressable Lighting interface, DALI; and/or Digital Serial Interface, DSI; and/or Universal Serial Bus, USB.

4. Communication module (100) in accordance with any one of the preceding claims, wherein the second interface (102) further comprises a 0-10V adapter or an 1-10V adapter, and the control unit (104) is further configured to transmit and/or to receive serial information via the 0-10V adapter or the 1-10V adapter.

5. Communication module (100) in accordance with any of the preceding claims, wherein the communication module (100) comprises the third interface (103), and wherein the third interface (103) comprises a wireless interface (201), wherein the control unit (104) is preferably further configured to transmit and/or to receive information via the wireless interface (201) by means of an IoT protocol, or an lot-ready protocol, or by means of one of the following protocols: Bluetooth; and/or Bluetooth Low Energy, BLE; and/or Wireless LAN, WLAN; and/or Near Field Communication, NFC; and/or Thread; and/or ZigBee.

6. Communication module (100) in accordance with any one of the preceding claims, wherein the communication module (100) comprises the third interface (103), and wherein the third interface further comprises a sensor (301), preferably an optical sensor.

7. Communication module (100) in accordance with claim 6, wherein the control unit (104) is further configured to receive sensor data from the sensor (301), to process said sensor data, and to transmit it as processed serial sensor data via the first interface (101) and/or the second interface (102).

8. Communication module (100) in accordance with any one of the preceding claims, wherein the first interface (101) and/or the second interface (102) are configured to establish a non-positive and/or positive connection to the lamp operating unit, the network element, or the further communication module, and preferably to stackably arrange the communication module (100) on the lamp operating unit, the network element, or the further communication module.

9. Communication module (100) in accordance with any one of the preceding claims, wherein the first interface (101) and the second interface (102) are designed as interfaces which correspond mechanically to one another.

10. A communication module (100) in accordance with any one of the preceding claims, wherein the first interface (101) comprises an RJ45 plug.

11. Communication module (100) in accordance with any one of claims 1 to 10, wherein the second interface (102) comprises an RJ45 socket.

12. Communication module (100) in accordance with any one of claims 1 to 9, wherein the second interface (102) comprises a USB interface.

13. Communication module (100) in accordance with any one of the preceding claims, wherein the communication module (100) is further configured so that information transfer takes place bi-directionally at the first interface (101) and/or the second interface (102) and/or the third interface (103), insofar as the communication module (100) has the third interface.

14. Communication module (100) in accordance with any one of the preceding claims, wherein operating information or control parameters for operating the lamp operating unit (400A) are stored in the control unit (104), and the module is configured to transmit serial information in accordance with the first protocol via the first and/or the second interface (101, 102).

15. Lamp operating unit (400 A), comprising:
- a wired interface (401), mechanically and functionally connectable to the communication module (100) in accordance with any one of claims 1 to 14, and
- at least one communication module (100) in accordance with any one of claims 1 to 14.

## Revendications

1. Module de communication (100) pour un appareil de fonctionnement de moyen d'éclairage, dans lequel le module de communication (100) présente :
- une première interface (101) filaire pouvant être reliée mécaniquement et de manière fonctionnelle à l'appareil de fonctionnement de moyen d'éclairage ou à un autre module de communication,
- une deuxième interface (102) filaire pouvant être reliée mécaniquement et de manière fonctionnelle à un élément de réseau ou à un autre module de communication,
- de préférence une troisième interface (103), et
- une unité de commande (104) reliée à la première interface (101), à la deuxième interface (102) et éventuellement à la troisième interface (103),
dans lequel l'unité de commande (104) est configurée pour recevoir et traiter des informations série selon un premier protocole par l'intermédiaire de la première et/ou de la deuxième interface (101, 102) et pour les envoyer en tant qu'informations série traitées par l'intermédiaire d'au moins l'une des trois interfaces (101, 102, 103),
dans lequel le module de communication (100) peut être monté en série avec un autre module de communication selon le premier protocole par l'intermédiaire de la première et/ou de la deuxième interface (101, 102), et
dans lequel le module de communication (100) et l'autre module de communication sont des modules de communication similaires,
**caractérisé en ce que**
le module de communication (100) est en outre configuré pour pouvoir être relié sélectivement aussi bien à l'appareil de fonctionnement de moyen d'éclairage qu'à l'autre module de communication au niveau de la première interface (101) filaire.

2. Module de communication (100) selon la revendication 1, dans lequel le module de communication (100) comprend la troisième interface (103), et
dans lequel l'unité de commande (104) est en outre configurée pour envoyer et/ou recevoir des informations par l'intermédiaire de la troisième interface (103) selon un second protocole différent du premier protocole.

3. Module de communication (100) selon la revendication 1 ou 2, dans lequel l'unité de commande (104) est en outre configurée pour envoyer et/ou recevoir des informations série par l'intermédiaire de la première interface (101) et/ou de la deuxième interface (102) au moyen d'un protocole Internet des objets, IoT, ou d'un protocole compatible avec l'IoT, ou au moyen d'un protocole parmi les protocoles ESI, et/ou interface numérique d'éclairage adressable, DALI, et/ou interface série numérique, DSI, et/ou bus série universel, USB.

4. Module de communication (100) selon l'une des revendications précédentes, dans lequel la deuxième interface (102) comprend en outre un adaptateur 0-10V ou un adaptateur 1-10V, et l'unité de commande (104) est en outre configurée pour envoyer et/ou recevoir des informations série par l'intermédiaire de l'adaptateur 0-10V ou de l'adaptateur 1-10V.

5. Module de communication (100) selon l'une des revendications précédentes, dans lequel le module de communication (100) comprend la troisième interface (103), et dans lequel la troisième interface (103) comprend une interface sans fil (201), l'unité de commande (104) étant de préférence en outre configurée pour envoyer et/ou recevoir des informations par l'intermédiaire de l'interface sans fil (201) au moyen d'un protocole loT ou d'un protocole compatible avec l'IoT, ou au moyen d'un protocole parmi les protocoles Bluetooth, et/ou Bluetooth à basse consommation, BLE, et/ou réseau local sans fil, WLAN, et/ou communication en champ proche, NFC, et/ou Thread et/ou ZigBee.

6. Module de communication (100) selon l'une des revendications précédentes, dans lequel le module de communication (100) comprend la troisième interface (103), et dans lequel la troisième interface comprend en outre un capteur (301), de préférence un capteur optique.

7. Module de communication (100) selon la revendication 6, dans lequel l'unité de commande (104) est en outre configurée pour recevoir et traiter des données de capteur provenant du capteur (301) et pour les envoyer en tant que données de capteur série traitées par l'intermédiaire de la première interface (101) et/ou de la deuxième interface (102).

8. Module de communication (100) selon l'une des revendications précédentes, dans lequel la première interface (101) et/ou la deuxième interface (102) sont configurées pour établir une liaison à force et/ou par complémentarité de forme avec l'appareil de fonctionnement de moyen d'éclairage, l'élément de réseau ou l'autre module de communication, et de préférence pour disposer le module de communication (100) de manière empilable sur l'appareil de fonctionnement de moyen d'éclairage, l'élément de réseau ou l'autre module de communication.

9. Module de communication (100) selon l'une des revendications précédentes, dans lequel la première interface (101) et la deuxième interface (102) sont formées en tant qu'interfaces mécaniquement correspondantes.

10. Module de communication (100) selon l'une des revendications précédentes, dans lequel la première interface (101) comprend un connecteur RJ45.

11. Module de communication (100) selon l'une des revendications 1 à 10, dans lequel la deuxième interface (102) comprend une prise RJ45.

12. Module de communication (100) selon l'une des revendications 1 à 9, dans lequel la deuxième interface (102) comprend une interface USB.

13. Module de communication (100) selon l'une des revendications précédentes, dans lequel le module de communication (100) est en outre configuré pour effectuer une transmission d'informations de manière bidirectionnelle au niveau de la première interface (101) et/ou de la deuxième interface (102) et/ou de la troisième interface (103), à condition que le module de communication (100) présente la troisième interface.

14. Module de communication (100) selon l'une des revendications précédentes, dans lequel des informations de fonctionnement ou des paramètres de commande pour le fonctionnement de l'appareil de fonctionnement de moyen d'éclairage (400A) sont stockés dans l'unité de commande (104) et le module de communication est configuré pour envoyer des informations série selon le premier protocole par l'intermédiaire de la première et/ou de la deuxième interface (101, 102).

15. Appareil de fonctionnement de moyen d'éclairage (400 A), présentant :
- une interface (401) filaire pouvant être reliée mécaniquement et de manière fonctionnelle au module de communication (100) selon l'une des revendications 1 à 14, et
- au moins un module de communication (100) selon l'une des revendications 1 à 14.
